# EUROPÄISCHE PATENTSCHRIFT

(11) **EP 2 522 887 B1**
(45) Veröffentlichungstag und Bekanntmachung des Hinweises auf die Patenterteilung: **09.08.2017**
(21) Anmeldenummer: 11003790.0
(22) Anmeldetag: 09.05.2011
(51) Int. Cl.: F16K 1/46

(54) **Ventiloberteil**
Valve top
Partie supérieure de soupape

(43) Veröffentlichungstag der Anmeldung: 14.11.2012
(73) Patentinhaber: Flühs Drehtechnik GmbH, D-58515 Lüdenscheid (DE)
(72) Erfinder: Thurau, Friedrich, 58849 Herscheid (DE)
(74) Vertreter: Patentanwälte Dörner & Kötter PartG mbB

(56) Entgegenhaltungen:
- DE-U1- 7 617 429
- DE-U1- 8 701 266
- DE-U1- 29 805 835

## Beschreibung

Die Erfindung betrifft ein Armaturengehäuse mit einem Ventiloberteil, wobei das Armaturengehäuse mit einem Anschlussgewinde versehen ist, in das das Ventiloberteil eingebracht ist, mit einem Kopfstück, einer das Kopfstück mittig durchsetzenden Spindel und einem über die Spindel betätigbaren Ventilkörper zur Anlage an einem Ventilsitz eines Gehäuses nach dem Oberbegriff des Patentanspruchs 1, bekannt aus der DE 298 05 835 U1. Ein weiteres Ventiloberteil ist aus der GB 2 137 736 A bekannt. Das Ventiloberteil dient der Steuerung des Austritts von Medien aus Armaturen. Zu diesem Zweck wird das Ventiloberteil mittels seines Kopfstücks in das Gehäuse einer Armatur geschraubt; auf seine Spindel wird ein Drehgriff oder Hebel befestigt. Zur Steuerung des Durchflusses ist ein Ventilstempel vorgesehen, der über die Spindel innerhalb des Kopfstücks linear bewegbar ist. Zur Abdichtung gegen den Ventilsitz nimmt der Ventilstempel eine Scheibe auf, die über eine Mutter oder einen angeformten Pilzkopf an dem Ventilstempel befestigt ist und die mit einer Bohrung versehen ist, welche eine Hinterspülung der Scheibe ermöglicht, wodurch die Scheibe sowie ein diese umgebender Dichtring gegen den Ventilsitz gepresst wird.

Nachteilig an dem vorbekannten Ventiloberteil ist, dass die Herstellung der Scheibe sowie ihrer Montage sehr aufwendig ist. Darüber hinaus genügt der zum Einsatz kommende Dichtring zunehmend nicht den immer strenger werdenden Anforderungen in Bezug auf Haltbarkeit und Dichtigkeit.

Hier will die Erfindung Abhilfe schaffen. Der Erfindung liegt die Aufgabe zu Grunde, ein Ventiloberteil der vorgenannten Art zu schaffen, bei der die Herstellung vereinfacht ist und dessen Dichtvorrichtung auch den zunehmend strengen Anforderung hinsichtlich Haltbarkeit und Dichtigkeit genüg. Gemäß der Erfindung wird diese Aufgabe durch die Merkmale des kennzeichnenden Teils des Patentanspruchs 1 gelöst.

Mit der Erfindung ist ein Ventiloberteil geschaffen, bei dem die Herstellung vereinfacht ist und dessen Dichtvorrichtung den zunehmend strengen Anforderungen hinsichtlich Haltbarkeit und Dichtigkeit genüg. Durch die innerhalb der konzentrisch zur Spindelachse befindlichen Nut angeordnete Dichtscheibe, welche die Nut in ihrer Höhe überragt, ist eine definierte Anpresskraft der Dichtscheibe gegen den Ventilsitz bewirkt. Der die Nut nach außen begrenzende Rand des Ventilstempels dient dabei als Anschlag gegen den Ventilsitz. Darüber hinaus ist die Dichtscheibe durch die Nutwände umlaufend gestützt, wodurch der Verschleiß reduziert ist.

In Weiterbildung der Erfindung ist an dem Ventilstempel an seiner der Nut zugewandten Seite auf der Spindelachse ein Stift angeformt, der zur Aufnahme eines Befestigungselementes zur Fixierung der Dichtscheibe ausgebildet ist. Durch die Fixierung der Dichtscheibe sind relative Bewegungen der Dichtscheibe innerhalb der Nut vermieden, wodurch der Verschleiß weiter reduziert ist.

In Ausgestaltung der Erfindung ist der Stift zumindest bereichsweise mit einem Gewinde zur Aufnahme eines Schrauben- oder Mutternkörpers versehen. Hierdurch ist eine einfachere Montage des als Befestigungselement zum Einsatz kommenden Schrauben- oder Mutternkörpers erzielt.

In weitere Ausgestaltung der Erfindung ist der Stift mit einem Außengewinde versehen, auf dem eine Hutmutter die Dichtscheibe einklemmend aufgeschraubt ist. Durch die Hutmutter ist eine vollständige Abschottung des Stiftes gegenüber dem umströmenden Medium erzielt. Die Dichtscheibe ragt mit nicht mehr als 30 %, bevorzugt nicht mehr als 20 % ihrer Höhe aus der Nut heraus. Hierdurch ist eine hohe Abstützung der Dichtscheibe innerhalb der Nut, verbundenen mit einer ausreichenden Anpresskraft der Dichtscheibe gegen den Ventilsitz erzielt. Dabei ist die Dichtscheibe vorteilhaft aus einem Elastromer, bevorzugt aus Gummi hergestellt.

Erfindungswesentlich ist hierbei, dass die Höhe, mit der die Dichtscheibe aus der Nut hervorragt gerade so groß gewählt ist, dass eine hinreichende Dichtigkeit bei Auflage des Randes der Nut gewährleistet ist. Die Höhe ist somit im Wesentlichen durch die Elastizität der Dichtscheibe bestimmt. Der Ventilstempel ist über einen kegelstumpfförmigen Abschnitt mit dem Ventilkörper verbunden. Durch den kegelstumpfförmigen Abschnitt werden die durch den als Anschlag fungierenden äußeren Nutenrand eingeleiteten Kräfte gleichmäßig in den Ventilkörper eingeleitet, wobei Biegeeffekte weitgehend vermieden sind.

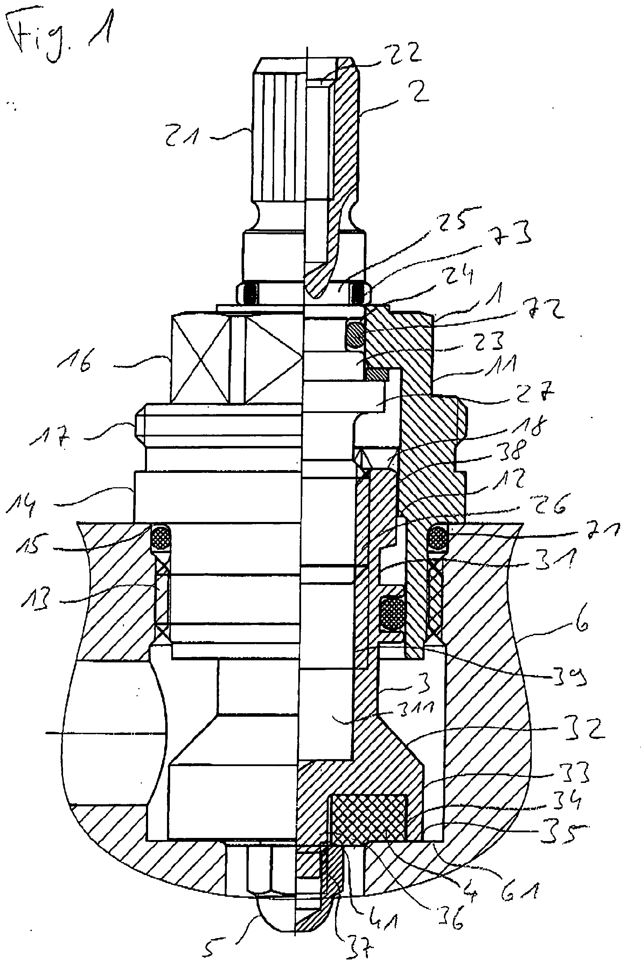

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Die einzige Figur 1 zeigt die Darstellung eines Ventiloberteils teilweise in Ansicht, teilweise im Axialschnitt.

Das als Ausführungsbeispiel gewählte Ventiloberteil weist ein Kopfstück 1 auf, das von einer in dieser radial geführten Spindel 2 mittig durchsetzt ist. Über die Spindel 2 ist ein Ventilkörper 3 betätigbar, der mit dem Ventilsitz 61 des Gehäuses 6 zur Anlage kommt. Der Ventilkörper 3 weist einen im wesentlichen zylindrischen Ventilstempel 33 auf, der eine Dichtscheibe 4 aufnimmt, die von dem umlaufenden Rand 35 der die Dichtscheibe 4 aufnehmenden Nut 34 umgeben ist, wobei die Dichtscheibe 4 sowie der umlaufende Rand 35 der Nut 34 mit dem Ventilsitz 61 des Gehäuses 6 zur Anlage kommen.

Das Kopfstück 1 besteht aus einem symmetrischen Hohlkörper, dessen beide Stirnflächen offen sind. Auf seiner dem Gehäuse 6 zugewandten Seite weist das Kopfstück einen hülsenartigen Teil 11 auf. An dem Teil 11 ist innen umlaufend ein Anschlag 12 zur Anlage des Ventilkörpers 3 angeformt. An seinem dem Gehäuse 6 zugewandten Ende ist das Kopfstück 1 außen mit einem Anschlussgewinde 13 versehen. Mit Hilfe des Anschlussgewindes 13 ist das Kopfstück 1 in das Gehäuse 6 der Armatur schraubbar.

Nach dem Einschrauben liegt ein Einschraubbund 14 des Kopfstücks 1 auf dem Gehäuse 6 der Armatur auf. Der Einschraubbund 14 weist auf seiner dem Anschlussgewinde 13 zugewandten Seite eine Ringnut 15 zur Aufnahme des O-Rings 71 auf. Das Einschrauben in die Armatur erfolgt mittels eines Außenmehrkants 16, der auf der dem Anschlussgewinde 13 abgewandten Seite des Einschraubbundes 14 vorgesehen ist. Dieser Teil des Kopfstücks 1 kann außen - wie dargestellt - mit einem zusätzlichen Gewinde 17 für die Aufnahme einer - nicht dargestellten - Hülse versehen sein. In Höhe des Einschraubbundes 14 und des Gewindes 17 ist der hülsenartige Teil 11 des Kopfstücks 1 innen mit einem Innensechskant 18 versehen.

Die Spindel 2 ist im Wesentlichen massiv ausgeführt. Sie ist an ihrer dem Kopfstück 1 abgewandten Seite außen als Außenvielkant 21 ausgeführt und innen mit einem Sackloch 22 mit Innengewinde für die Befestigung eines - nicht dargestellten - Drehgriffs versehen. Anschließend ist außen an der Spindel 2 eine Zylinderfläche 23 vorgesehen, mit der die Spindel 2 in dem Kopfstück 1 radial geführt ist. In der Zylinderfläche 23 ist eine Ringnut 24 zur Aufnahme eines O-Rings 72 eingebracht. Der O-Ring 72 dichtet die Spindel 2 gegen das Kopfstück 1 ab. Zwischen der Zylinderfläche 23 und dem Außenvielkant 21 ist ein Einstich 25 vorsehen, in den eine Wellensicherung 73 in Form eines Sprengrings federnd eingelegt ist. Die Wellensicherung 73 verhindert das Eindringen der Spindel 2 in das Kopfstück 1 über das vorgesehene Maß hinaus.

Die Spindel 2 ist in dem Kopfstück 1 drehbar. Auf ihrer dem Außenvielkant 21 entgegengerichteten Seite weist die Spindel 2 ein Außengewinde 26 auf. Oberhalb des Außengewindes 26 ist ein Einschraubbund 27 angeformt.

Der Ventilkörper 3 weist einen hohlzylindrischen Teil 31 auf, der über einen kegelstumpfförmigen Absatz 32 mit einem Ventilstempel 33 verbunden ist. Konzentrisch zur Rotationsachse der Spindel 2 ist in den Ventilstempel 33 eine Nut 34 zur Aufnahme der Dichtscheibe 4 eingebracht. Die Nut 34 ist nach außen begrenzt durch einen umlaufenden Rand 35. Nach innen ist die Nut 34 begrenzt durch einen auf der Rotationsachse der Spindel 2 an den Ventilstempel 33 angeformten Stift 36 der oberhalb der Nut 34 mit einem Außengewinde 37 versehen ist. An seinem dem Ventilstempel 33 abgewandten Ende ist an dem hohlzylindrischen Teil 31 ein Außensechskant 38 angeformt. Der Außensechskant 38 dient der Verdrehsicherung des Ventilkörpers 3 innerhalb des Kopfstücks 1. Ihnen ist der hohlzylindrische Teil 31 mit einem Innengewinde 39 versehen.

Die Dichtscheibe 4 ist kreisrund ausgebildet, wobei der Außendurchmesser der Dichtscheibe 4 im Wesentlichen dem Innendurchmesser des umlaufenden Randes 35 der Nut 34 entspricht. Mittig ist in die Scheibe 4 eine Bohrung 41 eingebracht. Dabei ist der Durchmesser der Bohrung 41 etwas größer gewählt als der Außendurchmesser des Stiftes 36 des Ventilstempels 33 im Bereich der Nut 34, der die Scheibe 4 aufnimmt. Die Dichtscheibe 4 ist über eine Hutmutter 5 innerhalb der Nut 34 fixiert, welche auf das Außengewinde 37 des Stifts 36 aufgeschraubt ist.

Der Ventilkörper 3 ist derart in das Kopfstück 1 eingebracht, dass der Außensechskant 38 des Ventilkörpers 3 an dem Innensechskant 18 des Kopfstücks 1 anliegt, wodurch der Ventilkörper 3 in dem Kopfstück 1 verdrehsicher gehalten ist. In das Innengewinde 39 des Ventilkörpers 3 ist das Außengewinde 26 der Spindel 2 eingeschraubt, wobei die Spindel 2 über die Wellensicherung 73 innerhalb des Kopfstücks 1 axial fixiert ist. Eine Drehung der Spindel 2 bewirkt somit eine axiale Bewegung des Ventilkörpers 3 innerhalb des Kopfstücks 1. Diese axiale Bewegung des Ventilkörpers 3 ist begrenzt durch den Anschlag 12 des Kopfstücks 1, an dem in Endstellung der mit dem Gewinde 17 zugewandte obere Absatz 37 des Ventilkörpers 3 anliegt. Unterhalb des Innengewindes 39 ist in dem hohlzylindrischen Teil 31 eine Fettkammer 311 angeordnet. Die Fettkammer 311 dient der Sicherstellung des Gewindelaufs zwischen Innengewinde 39 des hohlzylindrischen Teils und Außengewinde 26 der Spindel 2.

In montiertem Zustand des Ventiloberteils liegt in der entgegengesetzten Endstellung des Ventilkörpers 3 der umlaufende Rand 35 des Ventilstempels 33 am Ventilsitz 61 des Gehäuses 6 an. Dabei wird die Dichtscheibe 4 mit einer definierten Kraft, welche sich ergibt aus der Elastizität des Materials der Dichtscheibe 4 und dem Überstand der Dichtscheibe 4 über den umlaufenden Rand 35 in geöffneter Ventilstellung, gegen den Ventilsitz 61 angepresst. Der umlaufende Rand 35 des Ventilstempels 33 dient gleichzeitig als Anschlag, sodass ein übermäßiges Anpressen der Dichtscheibe 4 gegen den Ventilsitz 61 verhindert ist.

## Patentansprüche

1. Armaturengehäuse (6) mit einem Ventiloberteil, wobei das Armaturengehäuse mit einem Anschlussgewinde (13) versehen ist, in das das Ventiloberteil eingebracht ist, mit einem Kopfstück, einer das Kopfstück mittig durchsetzenden Spindel und einem über die Spindel betätigbaren Ventilkörper zur Anlage an dem Ventilsitz des Gehäuses, wobei an dem Ventilkörper auf seiner der Spindel abgewandten Seite eine Dichtvorrichtung angeordnet ist, wobei die Dichtvorrichtung einen im Wesentlichen zylindrisch ausgebildeten Ventilstempel (31) umfasst, wobei der Ventilstempel der über einen kegelstumpfförmigen Abschnitt (32) mit dem Ventilkörper (3) verbunden ist und konzentrisch zur Spindelachse mit einer Nut (34) versehen ist, die eine die Nut (34) in ihrer Höhe überragende Dichtscheibe (4) aufnimmt, **dadurch gekennzeichnet, dass** die Dichtscheibe (4) mit nicht mehr als 30 Prozent ihrer Höhe aus der Nut (34) herausragt und wobei der umlaufende Rand (35) des Ventilstempels (33) in einer Endstellung des Ventilkörpers (3) am Ventilsitz (61) des Armaturengehäuses (6) anliegt.

2. Armaturengehäuse mit einem Ventiloberteil nach Anspruch 1, **dadurch gekennzeichnet, dass** an dem Ventilstempel (32) an seiner der Nut (34) zugewandten Seite auf der Spindelachse ein Stift (36) angeformt ist, der zur Aufnahme eines Befestigungselementes zur Fixierung der Dichtscheibe (4) ausgebildet ist.

3. Armaturengehäuse mit einem Ventiloberteil nach Anspruch 2, **dadurch gekennzeichnet, dass** der Stift (36) zumindest bereichsweise mit einem Gewinde (37) zur Aufnahme eines Schrauben- oder Mutternkörpers versehen ist.

4. Armaturengehäuse mit einem Ventiloberteil nach Anspruch 3, **dadurch gekennzeichnet, dass** der Stift (36) mit einem Außengewinde (37) versehen ist, auf dem eine Hutmutter (5) die Dichtscheibe (4) einklemmend aufgeschraubt ist.

5. Armaturengehäuse mit einem Ventiloberteil nach einem der vorgenannten Ansprüche, **dadurch gekennzeichnet, dass** die Dichtscheibe (4) aus einem Elastomer, bevorzugt aus Gummi hergestellt ist.

6. Armaturengehäuse mit einem Ventiloberteil nach einem der vorgenannten Ansprüche, **dadurch gekennzeichnet, dass** der Ventilkörper (3) ein Innengewinde (39) aufweist, das mit einem an der Spindel (2) angeordnetes Außengewinde (26) im Eingriff ist, wobei das Innengewinde (39) in einer Fettkammer (311) mündet.

## Claims

1. Valve housing (6) having a valve top, where the valve housing has a connecting thread (13) into which the valve top is fitted, having a head piece, a spindle passing through the centre of the head piece, and a valve body to rest against the valve seat of the housing and to be actuated by means of the spindle, where a sealing device is arranged on the side of the valve body facing away from the spindle, where the sealing device comprises a valve plunger (31) which is substantially cylindrical in shape, where the valve plunger is connected to the valve body (3) via a portion (32) in the form of a truncated cone and has a groove (34) concentric with the spindle axis that receives a sealing disc (4) which exceeds the groove (34) in height, **characterised in that** the sealing disc (4) projects out of the groove (34) by no more than 30 percent of its height and where the circumferential edge (35) of the valve plunger (33), in a final position of the valve body (3), rests against the valve seat (61) of the valve housing (6).

2. Valve housing with a valve top in accordance with claim 1, **characterised in that** a pin (36) to receive a fastening element for fixing the sealing disc (4) in position is formed on the spindle axis on the side of the valve plunger (32) facing the groove (34).

3. Valve housing with a valve top in accordance with claim 2, **characterised in that** the pin (36) is at least partly provided with a screw thread (37) to receive a screw body or a nut body.

4. Valve housing with a valve top in accordance with claim 3, **characterised in that** the pin (36) has an external thread (37) onto which a cap nut (5) is screwed to clamp the sealing disc in position.

5. Valve housing with a valve top in accordance with any of the preceding claims, **characterised in that** the sealing disc (4) is made of an elastomer, preferably of rubber.

6. Valve housing with a valve top in accordance with any of the preceding claims, **characterised in that** the valve body (3) has an inner thread (39) which engages an external thread (26) arranged on the spindle (2), where the inner thread (39) ends in a grease chamber (311).

## Revendications

1. Carter de robinetterie avec une partie supérieure de soupape, sachant que le carter de robinetterie est muni d'un filetage de raccordement (13) dans lequel est logée la partie supérieure de soupape, avec une pièce têtière, une broche traversant la pièce têtière en son milieu et avec un corps de soupape actionnable via la broche pour venir appliquer contre la siège de soupape du carter, sachant qu'est agencé un dispositif d'étanchéité contre le corps de soupape sur son côté ne regardant pas la broche, sachant que le dispositif d'étanchéité comprend un axe de soupape (31) configuré de façon essentiellement cylindrique, sachant que la tige de soupape qui est reliée via un segment tronconique (32) au corps de soupape (3) et est munie d'une rainure (34) concentrique à l'axe de broche, reçoit le disque d'étanchéité (4) dont la hauteur dépasse la rainure (34), **caractérisé en ce que** le disque d'étanchéité (4) ne fait pas saillie de la rainure (34) de plus de 30 pour cent en hauteur, et sachant que le bord périphérique (35) de la tige de soupape (33) applique, sur une position terminale du corps de soupape (3), contre le siège de soupape (61) du carter de robinetterie (6).

2. Carter de robinetterie avec une partie supérieure de soupape selon la revendication 1, **caractérisé en ce que** contre l'axe de soupape (32), sur le côté regardant la rainure (34) sur l'axe de broche, est moulée une tige (36) qui est configurée pour recevoir un élément de fixation servant à immobiliser le disque d'étanchéité (4).

3. Carter de robinetterie avec une partie supérieure de soupape selon la revendication 2, **caractérisé en ce que** la tige (36) est munie au moins localement d'un filetage (37) pour recevoir un corps de vis ou un corps d'écrou.

4. Carter de robinetterie avec une partie supérieure de soupape selon la revendication 3, **caractérisé en ce que** la tige (36) est munie d'un filetage extérieur (37) sur lequel est vissé un écrou à chapeau (5) bloquant le disque d'étanchéité (4).

5. Carter de robinetterie avec une partie supérieure de soupape selon l'une des revendications précédentes, **caractérisé en ce que** le disque d'étanchéité (4) est fabriqué en élastomère, de préférence en caoutchouc.

6. Carter de robinetterie avec une partie supérieure de soupape selon l'une des revendications précédentes, **caractérisé en ce que** le corps de soupape (3) présente un filetage intérieur (39) en engrènement avec un filetage extérieur (26) disposé contre la broche (2), sachant que le filetage intérieur (39) aboutit dans une chambre à graisse (311).
